# EUROPEAN PATENT APPLICATION

(11) **EP 2 368 434 A1**
(43) Date of publication of application: **28.09.2011**
(21) Application number: 08879079.5
(22) Date of filing: 23.12.2008
(51) Int. Cl.: A22B 5/00

(54) **MACHINE FOR EXTRACTING MATERIAL CLASSIFIED AS HAZARDOUS FROM THE MEDULLARY CANAL OF LIVESTOCK OF ANY KIND**

(71) Applicant: Extracción de Médulas y Complementos, S.L., 17457 Campllong Gerona (ES)
(72) Inventor: CATAFAU RIERA, Jaume, E-17457 Campllong, Girona (ES)
(74) Representative: Maldonado Jordan, Julia
(86) International application number: PCT/ES2008/000794
(87) International publication number: WO 2010/072849

(57) **Abstract**

The machine comprises a vertical displacement carriage (3) carrying a drive unit (4) for transmitting a rotational movement to a flexible cable (13) carrying at least one milling cutter (14), means (9, 10, 11) for collecting the hazardous material extracted from the animal, a bottom duct (12) for housing the cable, motor-driven roller units (6, 16) for displacing the front end of the cable (13) along given sections of its path, a device (25) for washing and disinfecting with pressurized hot water the funnel (9) for collecting the hazardous material and the flexible cable (13) and a programmable control unit (28) for controlling operation of the machine.

## Description

### Object of the invention

As indicated in the title, the present invention refers to a machine for extracting material classified as hazardous from the medullary canal of livestock of any kind. This machine is of the type that includes a support chassis with a vertical column. On this is a vertical displacement carriage carrying a drive unit for transmitting a rotational movement to a flexible cable, carrying at least one milling cutter for milling the medullary canal of the animal as it moves downwards through the interior of the medullary canal. It also includes means, in the form of a funnel, which is adjustable in height and connected to the neck of the animal, for collecting the specified risk material extracted from the medullary canal while the milling takes place, and a bottom duct for housing the flexible cable, between leaving the animal and the operating means on the vertical column, and which comprise a drive unit for transmitting the rotation movement.

### Application field of the invention

The machine which is the object of the invention is applicable in abattoirs for extracting specified risk material through milling of the medullary canal, including the spinal medullar, the dura mater, nerve tissue and spinal ganglions, in order to avoid transmission to consumers of the so-called bovine spongiform encephalopathy, commonly known as mad-cow disease.

### Antecedents of the invention

Different antecedents of machines and devices exist which aim to extract specified risk material (SRM) from livestock, especially bovine and ovine, from the medullary canal of the animal. These generally use a cable made up of one or more cutting elements which are driven through the interior of the medullary canal, to clean the medullary canal through traction or a combined forward and rotational movement.

Specifically, in the French invention patent 0303103, a device is described that extracts SRM using traction cable of inferior diameter to the spinal canal of the animal and which has multiple radial cutting edge blades, coaxial to the cable. This cable is operated by a traction mechanism with a geared motor drive and pulley, and at least one adapted idler sprocket to engage with the different blades of the cable, causing the cable to drag the spinal medullar and pachymeninx out when passing through the interior of the medullary canal.

This device presents the disadvantage that the cable places significant lateral pressure on the most curved parts of the spinal column of the animal and can cut or break the bone in different places.

Another disadvantage of this device is that, depending on the size of the animal, it can leave part of the dura mater and the start of the nerve tissue and spinal ganglions in some areas of the medullary canal, eliminating only partially the hazardous material which can transmit the disease to consumers.

In the Spanish invention patent ES2195711, also by the holder of the present invention, a machine to extract bone marrow from the spinal column of animals is described using a system of emptying, and another using compressed air. This presents the disadvantage of not guaranteeing total extraction of all SRM and, especially the start of nerve tissue and the spinal ganglions, so it does not totally eliminate the risk of transmission of diseases to humans either.

In the invention patent ES2288072, also by the holder of this invention, a device is described for the simultaneous extraction of the spinal medulla, the dura mater, the start of nerve tissue and the spinal ganglions, from livestock of any kind. This device has a traction cable carrying protective clamps and increasing blades, and a second traction and rotation cable carrying a milling cutter and means of rapid attachment to connect it to the traction cable, as well as means for selectively operating the aforementioned cables for traction and for traction and rotation while extracting the spinal medulla.

This device enables milling of the medullary canal, guaranteeing the total extraction of the risk material. However, it presents a disadvantage as it uses two cables which must be operated manually while introducing the traction cable into the medullary canal of the animal, and subsequently to connect the second cable for traction and rotation and attach it to the operating means that transmit the traction movements and combined traction and rotation movements respectively.

This device requires significant manual intervention by the operators and the continual substitution of cables to avoid the risk of cross contamination in processing successive animals.

Similarly, it should be highlighted that this patent does not have adequate means of protection to prevent the cables coming into contact with the floor of the abattoir, which can increase the risk of contamination and insufficient hygiene conditions.

In this section, it is important to highlight the existence of the invention patent ES2289924 by the holder of the present invention, which refers to improvements made to the aforementioned invention patent ES2288072.

In accordance with these improvements, the device includes a module to hold the animal without it swaying sideways, a module to compensate for vertical pressure produced by the animal's own weight and by the traction of the cable on the production line at the abattoir, an operating module which causes rotation of the cable carrying the milling cutters and longitudinal movement through the interior of the animal's medullary canal, and a module for steering the cable between the compensating module and the operating module.

The operating module comprises vertical guides on which there is a displacement carriage carrying a semicircular guide made of rollers on which an intermediate area of the operating cable is placed. A motor-driven roller is set on top of these guides, which operates the displacement carriage through a traction cable or production line, causing it to be raised or lowered.

The module steering the cable between the compensating module and the operating module has an interior passage for housing the cable, avoiding contact with the floor and thereby improving the hygienic conditions of the device. However, as for the previous devices, considerable manual intervention by operators is required to operate the cables and for manual connection and disconnection. As well as involving great physical effort, this requires a significant amount of time to extract the hazardous material from the medullary canal of each of the animals.

In the aforementioned invention patent, it is also necessary to constantly replace the cables used for processing successive animals, and cleaning and disinfecting them externally to avoid the risk of cross contamination by operators working the cables or due to the same cable coming into contact with successive animals.

### Description of the invention

The machine for extracting hazardous material from the medullary canal of livestock of any kind, the object of this invention, presents a series of construction particularities aimed, on one hand, at automating the process, minimising intervention by operators and considerably reducing the time necessary to carry out milling of the medullary canal and extraction of all hazardous material from each of the animals, and, on the other hand, to allow for cleaning and disinfection of the flexible cable carrying the milling cutter as it moves through the interior of the machine, and between two consecutive work cycles, enabling the same cable to be reused without risk of cross contamination in processing successive animals.

This type of machine is of the type which comprises a support chassis with a vertical column. On this is a vertical displacement carriage carrying a drive unit for transmitting a rotational movement to a flexible cable, carrying at least one milling cutter for milling the medullary canal of the animal as it moves downwards through the interior of the medullary canal, and with means, in the form of a funnel, which is adjustable in height and can be connected to the neck of the animal, for collecting the specified risk material extracted from the medullary canal while the milling takes place, and a bottom duct for housing the flexible cable from when it leaves the animal to the operating means on the vertical column. In accordance with the invention, this machine comprises a first motor-driven roller unit on the vertical displacement carriage for moving from the front end of the cable, in a forward and backward movement, respectively, when attaching and detaching automatically to the headstock connected to the driver that transmits a rotational movement to the cable during the milling operation.

In addition, the machine comprises a top duct to steer the front of the flexible cable moved by the first motor-driven roller unit from the top of the column to where the cable is introduced into the medullary canal of the animal to be processed; and a second motor-driven roller unit in the area where the cable is introduced into the medullary canal. This second roller unit is motorised and introduces the front of the cable automatically, causing the downward movement through the interior of the medullary canal of the animal to be processed.

The machine also comprises a device for washing and disinfecting the means for collecting the hazardous material extracted from the medullary canal with pressurised hot water, and the flexible cable housed in the bottom duct of the driver. The incorporation of this washing and disinfecting device has a relevant advantage compared to the antecedents described above as it makes it possible to clean and disinfect the cable carrying the milling cutter as it moves through the interior of the machine, and to reuse the cable without needing to remove it from the machine and without risk of contamination.

In addition, the machine comprises a programmable control unit for controlling functioning.

In carrying out the invention, the second motor-driven roller unit faces the exit of the top duct steering the cable, and is set on vertical displacement means to locate it in a position for introducing the cable into the medullary canal of the animal.

In accordance with the invention, the motor-driven roller units comprise a driving roller connected to a driver unit and a roll clamp which can be moved transversally by operating cylinders, from an operative position gripping the cable carrying the milling cutter or cutters, to an inoperative position to free the cable. In one use of the invention, the motor-driven roller units comprise an entrance and exit for the cable directed by cylinders, from a straight position to an oblique exit position.

In the aforementioned operative position, the motor-driven roller units cause the cable carrying the milling cutter or cutters to move as a result of the roller unit, due to the action of the driving roller.

In accordance with the invention, the device to wash and disinfect the flexible cable is in the lower duct, through which the cable passes between leaving the animal and the column carrying the means for operating the cable. In an example of use, this device to wash and disinfect comprises sprayers connected to a duct providing pressurised hot water, supplying water at a temperature of 85° to guarantee correct cleaning of the cable without the addition of chemical products or other additives.

In one use of the invention, the means to collect the specified risk material extracted from the medullary canal of the animal during the milling operation comprise a tube connected to a high, adjustable funnel aimed at connecting with the animal's neck. This tube has a lower opening for the extraction of risk material through suction.

In one use of the invention, the means for collecting the hazardous material extracted from the animal and the lower duct housing the flexible cable are on a frame that can be raised and is connected to the chassis by vertical operating cylinders.

Displacement of the aforementioned frame towards the higher area enables the means of extraction of the hazardous material, and specifically the higher funnel with the animal's neck, to be connected quickly and effectively.

### Description of diagrams

To complete the description and facilitate understanding of the different features of the invention, the present descriptive report includes a set of illustrative but not limiting diagrams in which the following can be seen:
- Figure 1 shows a schematic view from above of an example of use of the machine of the invention.
- Figure 2 shows schematic detail of one of the motor-driven roller units.
- Figure 3 shows detail from above of the means for collecting the hazardous material extracted from the animal and the bottom duct housing the flexible cable from leaving the animal to the operating means on the vertical column.
- Figures 4 to 15 show respective views of the machine from above in successive operative positions corresponding to a complete work cycle.

### Preferred setup of the invention

In the example of use shown in the figures attached, the machine comprises a chassis (1) with a vertical column (2) on which there is a vertical displacement carriage (3) driven by a drive unit (4). On the aforementioned carriage (3), there is a drive unit (4) for transmitting a rotational movement to the headstock (5) to automatically connect the cable, and a first motor-driven roller unit (6).

In its lower area, the machine comprises a frame (7) that can be lifted and is connected to the chassis (1) through operating cylinders (8). On the aforementioned frame (7) are the means for collecting the hazardous material extracted from the animals, including the top funnel (9) connected to a tube (10) with a opening lower down to extract hazardous material through suction.

On the frame (7) that can be lifted, there is a lower duct to steer the cable (13), carrying the milling cutter (14), between leaving the animal and the operating means in the vertical column (2).

In addition, the machine comprises a top duct (15) to steer the front end of the flexible cable (13) with the first motor-driven roller unit (6), once the milling operation has been conducted, in an area where the cable is introduced into the medullary canal of the animal to be processed.

In this area where the cable is introduced, the machine has a second motor-driven roller unit (16) facing the outlet of the top duct (15) and set on a cylinder (17) for vertical displacement, from a high position for collecting the cable (13) and a low position to introduce the cable (13) into the medullary canal of the animal.

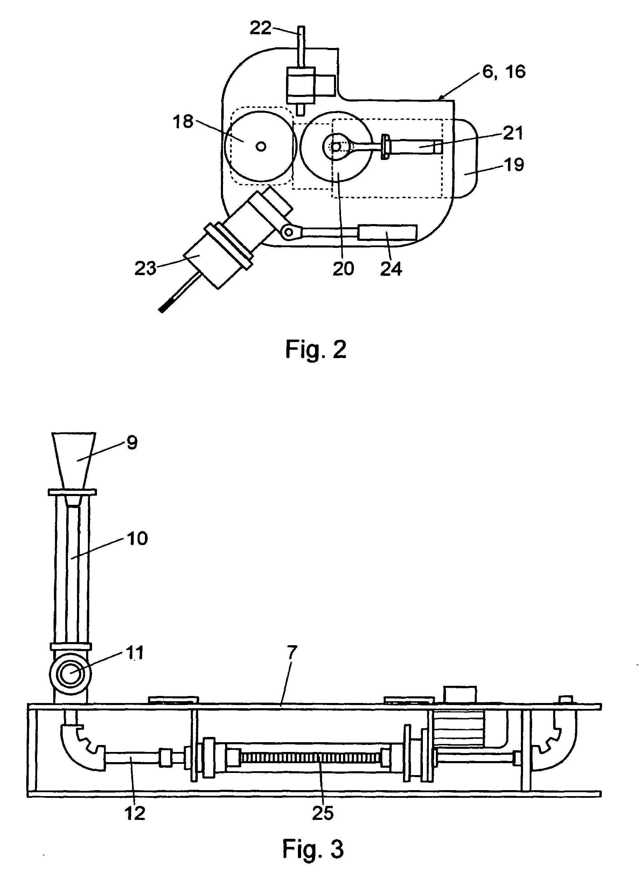

The motor-driven roller units (6 and 16) present the same configuration and, as shown in figure 2, they comprise a motor-driven roller (18) operated by a driver (19) and a roll clamp, which can be moved transversally by cylinders (21) to clamp or free the cable against the motor-driven roller (18). These motor-driven roller units (6, 16) comprise an entrance (22) for the cable and an outlet (23) directed by cylinders (24) from a straight position to an oblique outlet position.

As can be observed in figure 3, the bottom duct (12) has a device (25) for washing and disinfecting the cable (13) used for milling the medullary canal of an animal, and preparing it for subsequent use.

In one use of the invention, this device (25) for washing and disinfecting comprises sprayers connected to a duct supplying pressurised water at a temperature of 85° C.

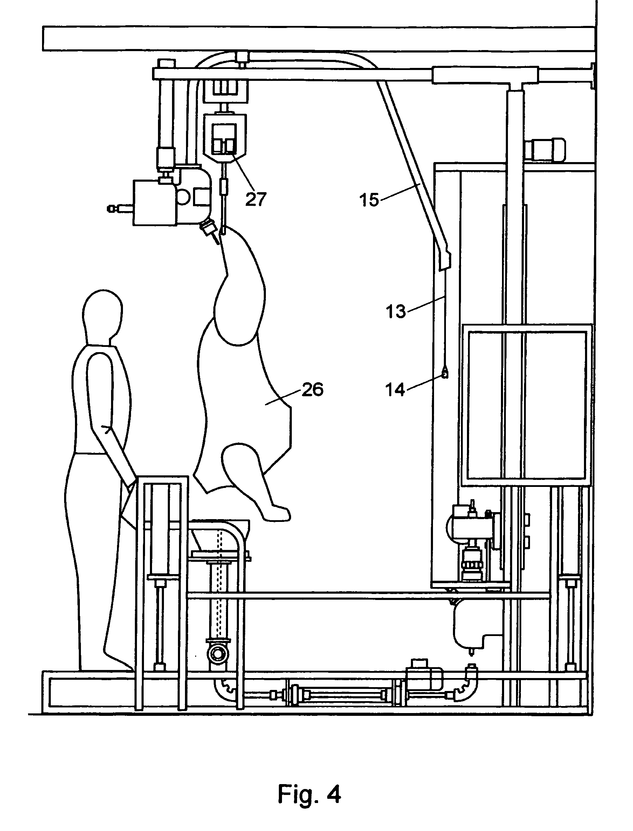

In an initial working position presented in figure 4, the cable (13) carrying the milling cutter is partially housed in the top duct (15), while waiting to be introduced into the medullary canal of the animal (26) to be processed, and joining the work area and production line machinery (27) at the abattoir.

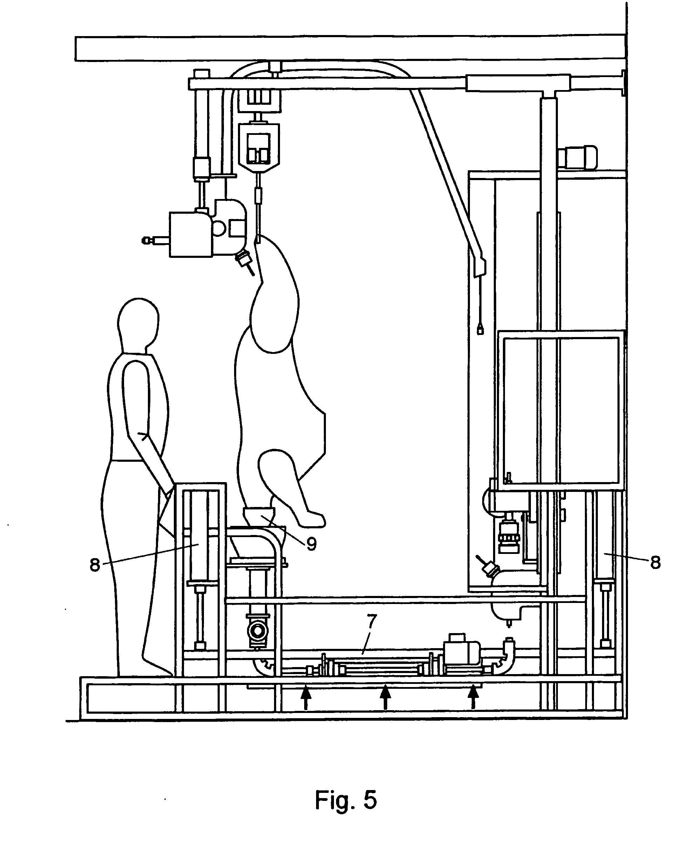

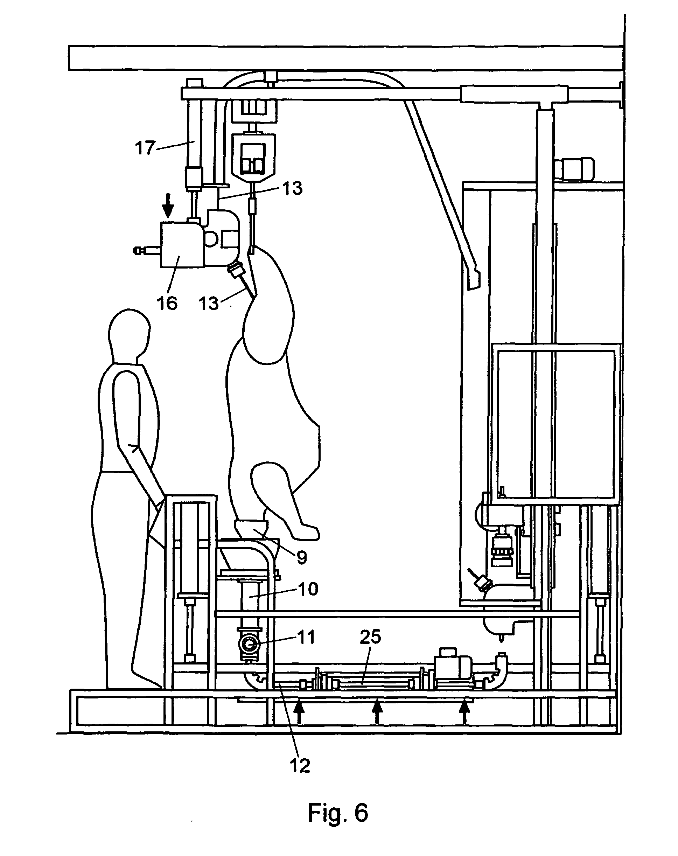

As shown in figure 5, the machine operator then raises the frame (7) that can be lifted using cylinders (8) connecting the funnel (9) to the animal's neck (26). In this phase, the second roller unit (16) is moved to the bottom area by the cylinder (17) to a position so that the cable (13) can be introduced through the medullary canal as shown in figure 6.

While this is happening, the cable (13) moves, due to the action of the second motor-driven roller unit (16), and the front end of the cable goes through the medullary canal of the animal, as well as the means for collecting hazardous material and the interior of the bottom duct (12) where it is washed by the device with pressurised hot water (25).

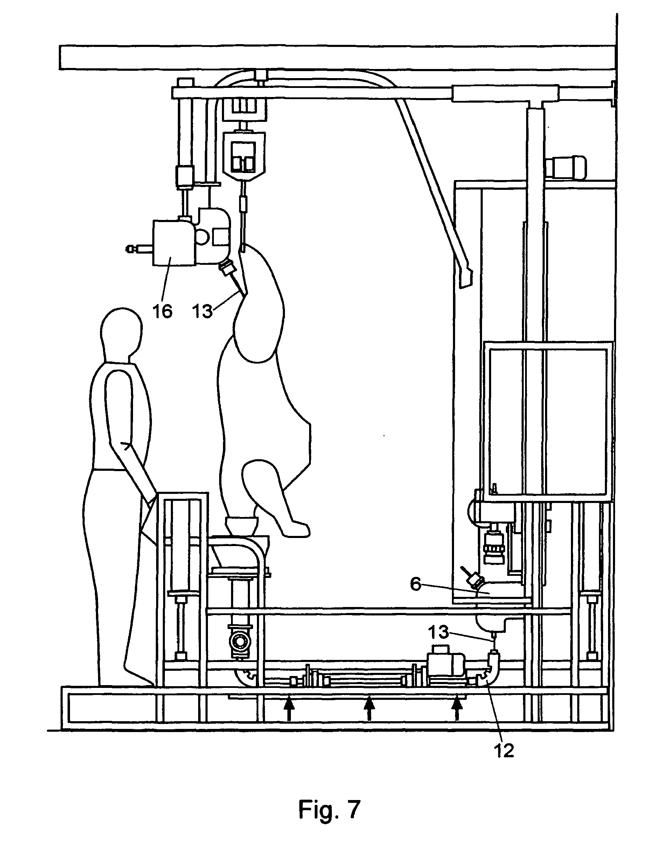

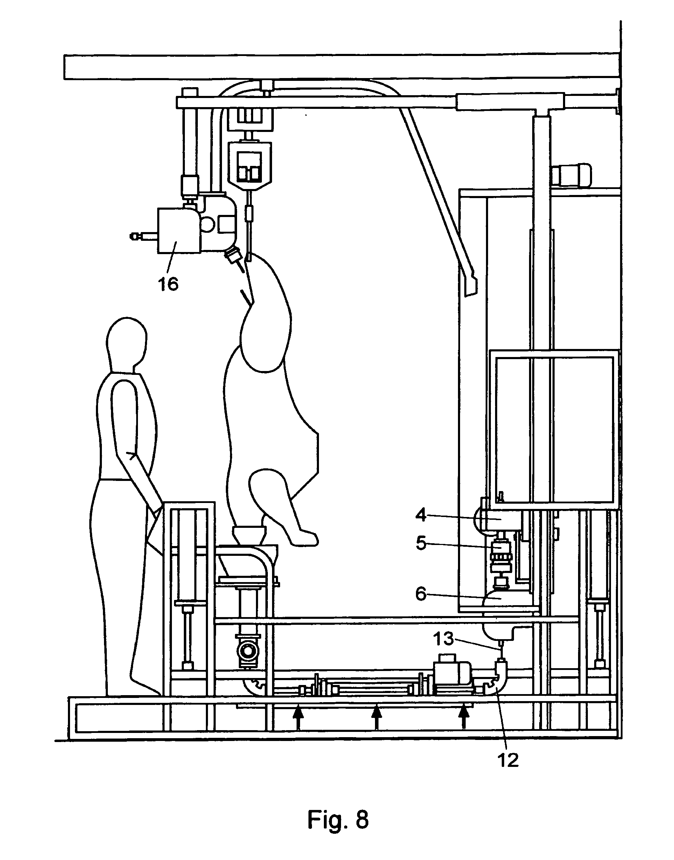

When the front end of the cable (13) leaves the bottom duct (4), it is collected by the first motor-driven roller unit (6) as shown in figure 7, and then freed by the second motor-driven roller unit (16) as shown in figure 8. The first motor-driven roller unit (6) then moves the cable, so that it connects itself automatically to the headstock (5) of the drive unit (4).

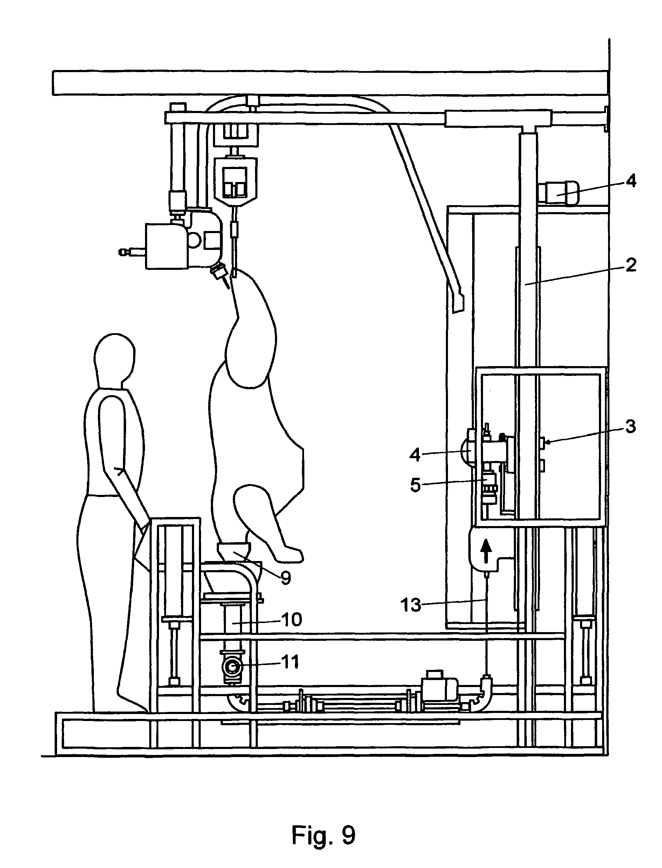

As shown in figure 9, the motor (4) then causes the carriage (3) to rise and, consequently, traction of the cable (13) until tension is detected indicating that the milling cutter has come into contact with the top end of the sacrum or medullary canal of the animal to be processed.

At this point, the motor (4) begins to operate in order to transmit to the cable (13) a rotational movement to carry out the milling of the medullary canal of the animal as the carriage (3) rises through the vertical column (2) operated by the motor (4).

During this milling operation, the hazardous material extracted from the animal is collected by the funnel (9) connected to the neck of the animal and extracted from the tube (10) through the application of suction through the opening (11).

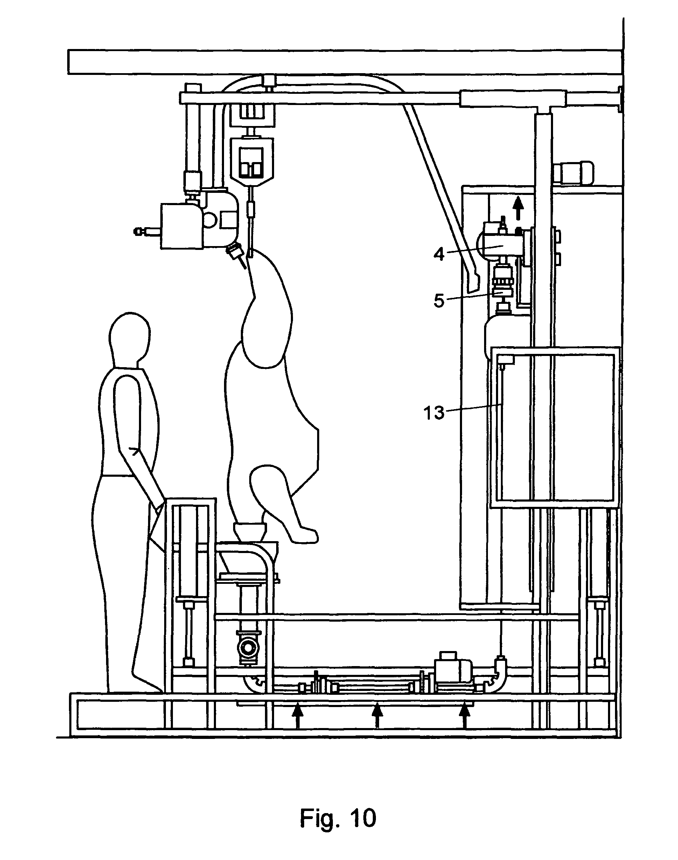

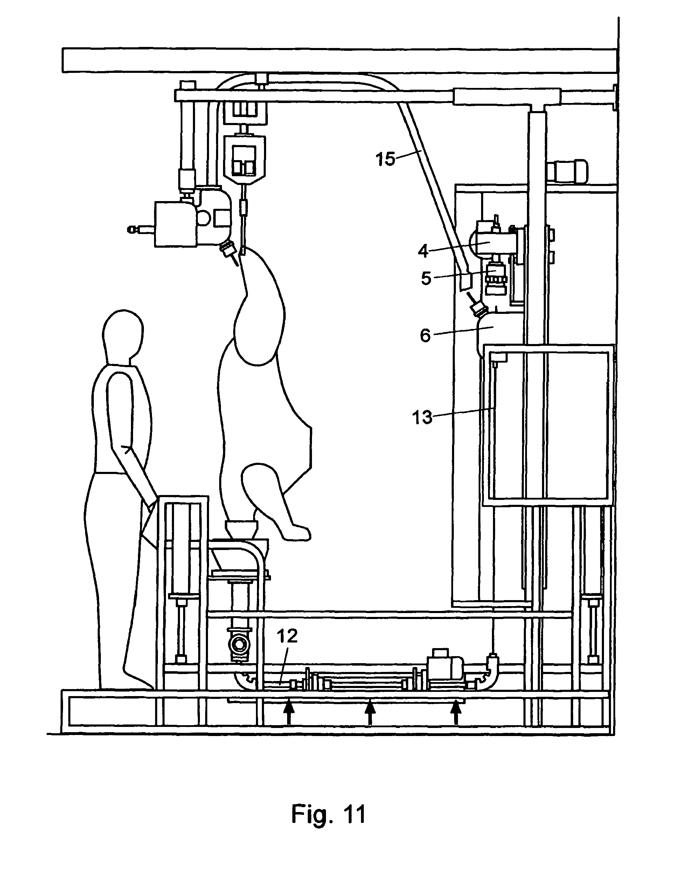

When the carriage (3) reaches the top position represented in figure 10 and the milling of the whole medullary canal of the animal has been carried out, the front end of the cable (13) is freed from the headstock (5) and directed by the first motor-driven roller unit (6) to an oblique position in which the front end of the cable (13) faces the top duct (15) as shown in figure 11.

It should be mentioned that at the exit of the bottom duct (12), the cable (13) and the corresponding milling cutter are already clean and in adequate hygienic conditions for subsequent use, which makes it possible to return it to the top position, waiting for the next animal to be processed.

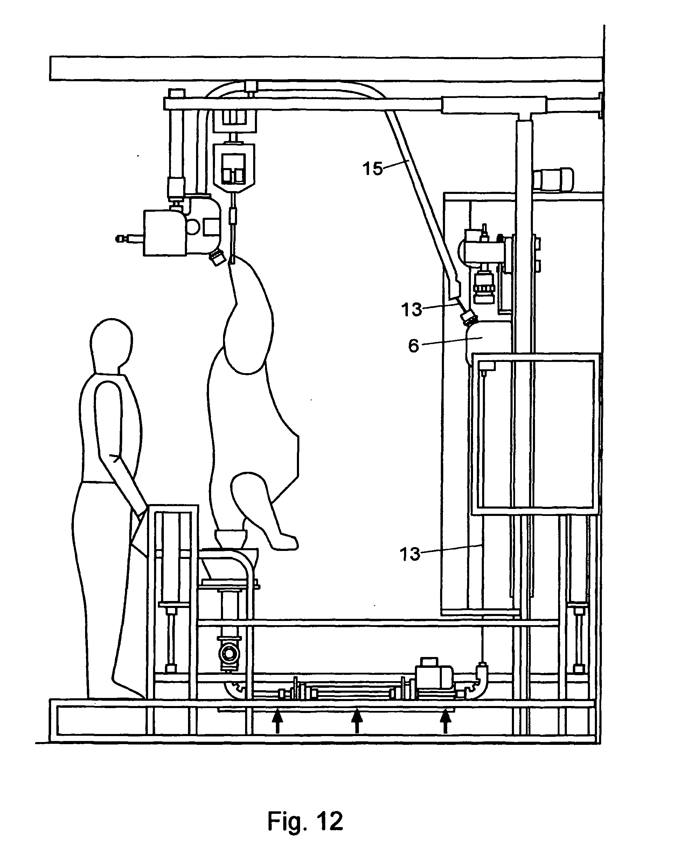

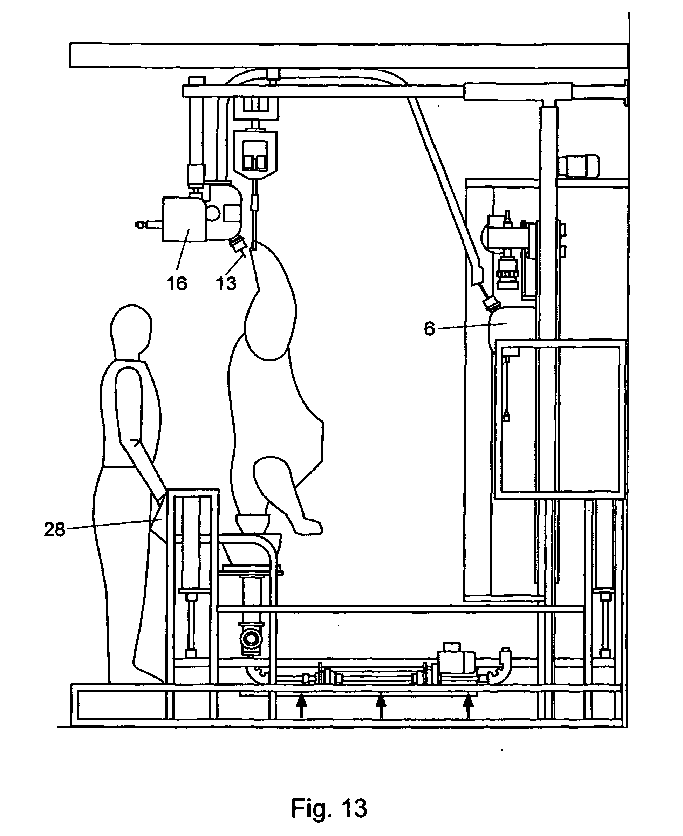

In figure 12, the introduction of the cable (13) by the first motor-driven roller unit towards the interior of the top duct (15) is shown schematically. This moves the cable until the front end of the cable is collected by the second motor-driven roller unit (16) as shown in figure 13.

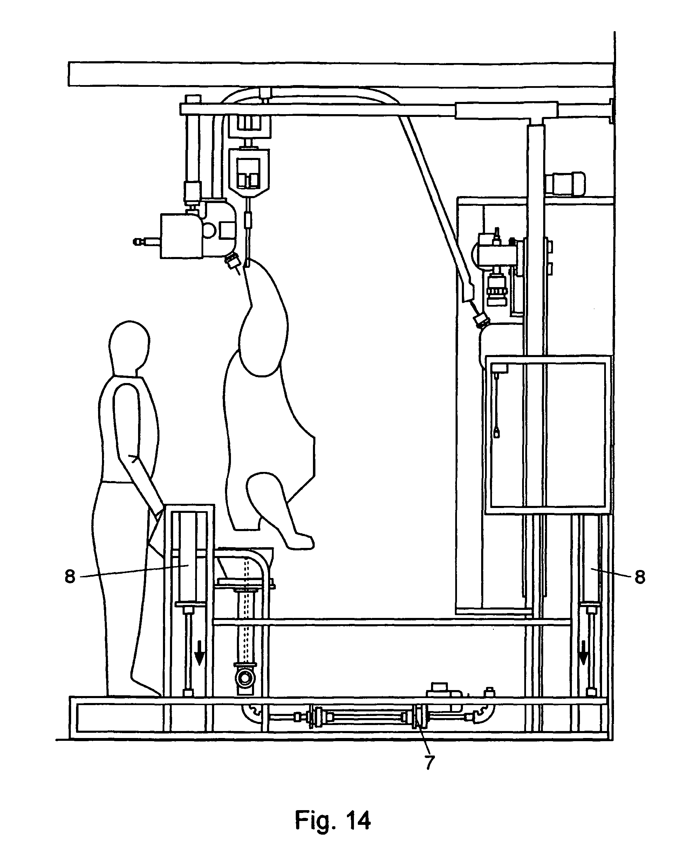

As shown in figure 13, the machine operator then lowers the moveable frame (7), and consequently the funnel (9), as shown in figure 14, freeing the animal so that it can be moved by away from the machine as part of the abattoir production line.

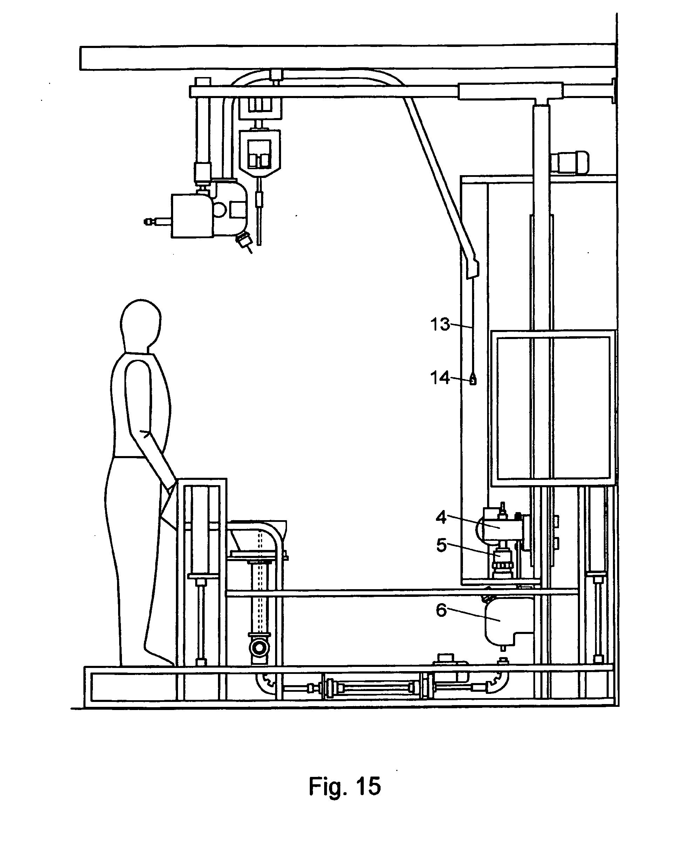

Finally, as shown in figure 15, the carriage (3), carrying the first motor-driven roller unit and the drive unit (4) that transmits the rotational movement to the cable through automatic connection to the headstock (5), returns to the lower position and the machine is ready to begin a new work cycle.

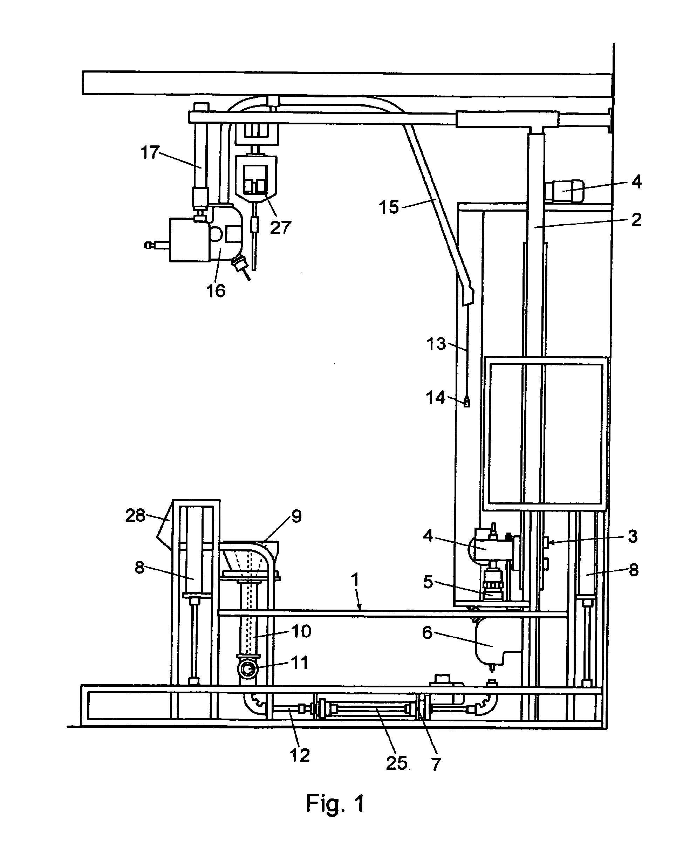

As previously mentioned, the machine comprises a programmable control unit (28), shown in figures 1 and 13 to control the operating parameters of the machine.

Having described in sufficient detail the nature of the invention, and provided an example of preferential use, it is stated for relevant purposes that the materials, shape, size and arrangement of the elements described can be modified, as long as they do not suppose an alteration of the essential features of the invention which are outlined below.

## Claims

1. Machine for extracting material classified as hazardous from the medullary canal of livestock of any kind. It is of the type that comprises a support chassis (1) with a vertical column (2). On this is a vertical displacement carriage (3) carrying a drive unit (4) for transmitting a rotational movement to a flexible cable (13), carrying at least one milling cutter (14) for milling the medullary canal of the animal (26) as it moves downwards through the interior of the medullary canal; and means (9, 10, 11), which are adjustable in height and are connected to the neck of the animal, for collecting the hazardous material extracted from the medullary canal while the milling takes place, and a bottom duct (12) for housing the flexible cable, between leaving the animal and the operating means (4) on the vertical column (2); **characterised in that** it includes:
- A first motor-driven roller unit (6), on the vertical displacement carriage (3) to move the front end of the cable (13) in a forward and backward movement as it is attached and detached, respectively, automatically to the headstock (5) connected to the driver unit (4) to transmit a rotational movement to the cable (13) during the milling operation,
- a top duct (15) to steer the front end of the flexible cable (13) moved by the first motor-driven roller unit (6) from the top of the column (2) to the area where the cable is introduced into the medullary canal of the animal to be processed,
- a second motor-driven roller unit (16) in the area where the cable (13) is introduced into the medullary canal, for the automatic introduction of the front end of the cable (13) and its downward movement through the interior of the medullary canal of the animal to be processed,
- a device (25) for washing and disinfecting the funnel (9) with pressurised hot water that collects specified risk material and the flexible cable (13) housed in the interior duct (12), and,
- a programmable control unit (28) for controlling operation of the machine.

2. - Machine, according to claim 1, **characterised in that** the second motor-driven roller unit (16) faces the outlet of the top duct (15) steering the cable and is set on means of vertical displacement (12) so it can approach a position where the cable (13) is introduced into the medullary canal of the animal.

3. - According to the previous claims, the machine is **characterised in that** the motor-driven roller units (6, 16) comprise a driver roller (18) connected to a drive unit (19), a roll clamp (20) which can be moved transversally by operating cylinders (21) from an operative position gripping the cable (13) to an inoperative position freeing the cable, an entrance (22) for the cable and an exit (23), which can be directed by cylinders (24) from a straight position to an oblique outlet position.

4. - According to the previous claims, the machine is **characterised in that** the device (25) for washing and disinfecting the flexible cable (13) is in the bottom duct (12) and comprises sprayers connected to a duct that supplies pressurised hot water.

5. - According to the previous claims, the machine is **characterised in that** the means for collecting the specified risk material extracted from the medullary canal of the animal comprise a tube (10) connected to a funnel (9) of adjustable height to be attached to the neck of the animal. This tube (10) has an opening (11) lower down to extract hazardous material through suction.

6. - According to the previous claims, the machine is **characterised in that** the means of extraction (9, 10, 11) of the hazardous material and the interior tube (12) are arranged on a vertical displacement frame (7) associated to the chassis (1) by means of vertical operating cylinders (8).
